# EUROPÄISCHE PATENTANMELDUNG

(11) **EP 0 829 749 A1**
(43) Veröffentlichungstag der Anmeldung: **18.03.1998**
(21) Anmeldenummer: 97250262.9
(22) Anmeldetag: 09.09.1997
(51) Int. Cl.: G03B 17/10, G10K 11/16

(54) **Laufbildkamera**

(30) Priorität: 12.09.1996 DE 19638730
(71) Anmelder: ARNOLD & RICHTER CINE TECHNIK GMBH & CO. BETRIEBS KG., D-80799 München (DE)
(72) Erfinder: Kehrer, Klemens, 1150 Wien (AT); Koppetz, Michael, 81669 München (DE)
(74) Vertreter: Ninnemann, Detlef, Dipl.-Ing.

(57) **Zusammenfassung**

Laufbildkamera mit einem Kameragehäuse und einer im Kameragehäuse angeordneten Filmtransporteinrichtung. Teile der Laufbildkamera, die geeignet sind, Körper- und/oder Luftschall zu übertragen sowie Zubehörteile der Laufbildkamera sind als Aluminiumteile mit einem Aluminiumschaumkern ausgebildet sind bzw. enthalten Aluminiumschaum.

## Beschreibung

Die Erfindung bezieht sich auf eine Laufbildkamera gemäß dem Oberbegriff der Ansprüche 1 oder 4.

Der Betrieb einer Laufbildkamera ist aufgrund des mechanischen Aufbaus der zum Filmtransport notwendigen, elektromotorisch angetriebenen Filmtransporteinrichtung, die aus einzelnen, Relativbewegungen zueinander ausführenden Bauteilen aufgebaut ist, stets mit einer erheblichen Geräuschbildung verbunden. Diese Geräusche erweisen sich insbesondere dann als störend, wenn simultan zur Filmaufnahme mit einer Laufbildkamera Tonaufnahmen gemacht werden. Daher besteht schon seit langem das Bedürfnis, solche Geräusche beim Betrieb einer Laufbildkamera weitgehend zu unterdrücken.

Aus diesem Grunde machen die Hersteller von Laufbildkameras seit Jahren große Anstrengungen, um mit vertretbarem Aufwand ein hohes Maß an Schallisolierung oder Geräuschminderung bei Laufbildkameras zu erzielen. So ist es beispielsweise bekannt, die Innenwand des Kameragehäuses mit Schaumstoff auszukleiden, um den von der Filmtransporteinrichtung ausgehenden Luft- und Körperschall zu absorbieren.

Diese Lösung ist jedoch nicht befriedigend, da zum einem zur Erzielung einer hinreichenden Dämmung des Luft- und Körperschalls eine relativ dicke Ausführung der Schaumauskleidung notwendig ist und damit im Widerspruch zu einem kompakten Aufbau des Kameragehäuses steht und sich zum anderen die Schaumstoffisolierung als wenig wirksam zur Luft- und Körperschallabsorbierung erweist.

Aus der DE 89 15 782.6 U ist es bekannt, den Innenraum einer Laufbildkamera oder Teile der Filmtransporteinrichtung sowie den Innenraum einer mit der Laufbildkamera verbindbaren Filmkassette mit einem Beflockungsbelag zu versehen, der aus auf einem Klebemittel haftenden Härchen besteht. Mit dieser Lösung wird eine wirksame Geräuschdämmung geschaffen, die mit einem geringen Platzbedarf im Innern des Gehäuses einer Laufbildkamera bzw. einer Filmkassette verbunden ist und wegen der Anbringung im Innern des Gehäuses die äußere Struktur der Laufbildkamera oder Filmkassette nicht beeinflußt, so daß die Handhabung und der Gebrauch der Laufbildkamera nicht behindert wird. Durch die Beflockung der Innenflächen der Laufbildkamera bzw. Filmkassette wird bei geringem Raumbedarf die schallabsorbierende Fläche vervielfacht und es werden durch das unmittelbare Aufbringen auf die Gehäuseteile die körperschallübertragenden Eigenschaften der Gehäuseteile bzw. der Filmtransporteinrichtung wesentlich reduziert.

Eine weitere Maßnahme zur Geräuschreduzierung von Laufbildkameras besteht darin, die Kamera in ein Kamera-Außengehäuse mit einer Objektivbefestigung zur Aufnahme der auswechselbaren Aufnahmeoptik und in ein Kameraskelett bzw. eine Innenkamera aufzuteilen, die alle für den Transport des Laufbildfilmes von der Filmabwickelspule zur Filmaufwickelspule notwendigen Motor- und Getriebeeinrichtungen besitzt und im allgemeinen mit dem Bildfenster, der beweglichen Blendeneinrichtung und einer Mattscheibe ausgestattet ist.

Um im Betrieb der Laufbildkamera die von den beweglichen Einrichtungen der Innenkamera erzeugten mechanische Schwingungen und Geräusche nicht oder stark reduziert auf das Kamera-Außengehäuse zu übertragen, werden zur Geräusch- und Schwingungsisolation Dämpfungselemente aus elastomeren Materialien vorgesehen, mit denen die Innenkamera mit dem Außengehäuse verbunden wird. Dabei muß sichergestellt sein, daß das Auflagemaß, das dem Abstand zwischen der am Außengehäuse festgelegten Objektivebene und der an der Innenkamera festgelegten Bildebene entspricht, konstant ist, um Bildunschärfen und/oder Bildverschiebungen auszuschließen. Die Eigenschaften der Dämpfungselemente bestimmen dabei das Maß der erreichbaren Geräuschreduzierung einerseits und der Stabilität des Auflagemaßes zwischen der mit dem Kameragehäuse verbundenen Objektivbefestigung und dem mit der Innenkamera verbundenen Bildfenster andererseits.

Aus der EP 0 475 544 A1 ist eine Vorrichtung zur Geräuschisolation von Laufbildkameras bekannt, bei der die schallschützende Abstützung der Innenkamera bzw. des Kameraskeletts im Kameragehäuse durch schallisolierende Verbindungselemente erfolgt, die eine richtungsabhängige Eigensteifigkeit mit hoher Steifigkeit in einer Richtung senkrecht zur Bildebene des Kameraskeletts sowie mit geringer Steifigkeit in einer Ebene parallel zur Bildebene aufweisen. Mit dieser richtungsabhängigen Eigensteifigkeit wird zum einen die für die Schallisolation geforderte weiche Aufhängung des Kameraskeletts im Kameragehäuse und zum anderen die für die Einhaltung eines konstanten Auflagemaßes erforderliche harte Steifigkeit der Verbindungselemente in der Ebene senkrecht zum Auflagemaß eingehalten. Durch zusätzliche Maßnahmen, wie Anordnung der Verbindungselemente mit richtungsabhängiger Eigensteifigkeit zwischen der Frontseite des Kameraskeletts und der Frontseite des Kameragehäuses und eines Verbindungselementes zwischen der Rückseite des Kameraskeletts und der Rückseite des Kameragehäuses, das bei hoher Elastizität eine große Vorspannkraft zwischen dem Kameraskelett und dem Kameragehäuse ausübt, kann die geräuschisolierende Wirkung bei gleichzeitiger Konstanz des Auflagemaßes optimiert werden.

Der vorliegenden Erfindung liegt die Aufgabenstellung zugrunde, für eine Laufbildkamera der eingangs genannten Art eine wirksame, mit geringem Platzbedarf und Gewicht verbundene, die Handhabung der Laufbildkamera nicht behindernde, kostengünstig herstellbare und auch für komplexe Bauformen verwendbare Schallisolierung zu schaffen.

Diese Aufgabe wird durch das kennzeichnende Merkmal des Anspruchs 1 oder des Anspruchs 4 gelöst.

Die durch die Erfindung erreichten Vorteile sind im wesentlichen darin zu sehen, daß eine wirksame Geräuschdämmung geschaffen wird, die keinen zusätzlichen Platzbedarf im Innern des Kameragehäuses einer Laufbildkamera oder einer Filmkassette beansprucht, die sehr leichte Bauformen gewährleistet, die den Gebrauch der Laufbildkamera erleichtert, für beliebige Bauformen verwendbar und mit geringen Kosten herstellbar ist.

Die erfindungsgemäße Lösung eignet sich sowohl für Laufbildkameras, bei denen die Filmtransporteinrichtung unmittelbar im Kameragehäuse auf einer Art Platine oder dergleichen angeordnet ist, als auch für Laufbildkameras mit einem Kamera-Außengehäuse und einer Innenkamera bzw. einem Kameraskelett, bei der zur Schallisolierung ein zusätzliches inneres Gehäuse vorgesehen ist, das über aktive oder passive schallisolierende Elemente gegenüber dem äußeren Kameragehäuse abgestützt ist.

Eine derartige Abstützung der Innenkamera gegenüber dem Kameragehäuse kann bei Anwendung der erfindungsgemäßen Lösung aufgrund der hohen schallisolierenden Eigenschaften des Aluminiumschaums als Wand- oder Trägermaterial ggf. entfallen. Neben den schallisolierenden Eigenschaften des Aluminiumschaums wirkt sich dessen geringes spezifisches Gewicht aus, so daß zwei für leise Laufbildkameras wichtige Eigenschaften miteinander verknüpft werden und eine sehr leichte und gleichzeitig nahezu schalltote Laufbildkamera ergeben.

Im wesentlichen kommen zwei Anwendungsmöglichkeiten von Aluminiumschaum in Laufbildkameras zum Einsatz, nämlich eine Verwendung für das Außengehäuse und/oder die Innenkamera einer Laufbildkamera sowie eine Verwendung des Aluminiumschaums für Bauteile in der Laufbildkamera, die Körperschall übertragen und/oder Luftschall abstrahlen. Aufgrund des geringen spezifischen Gewichts können sämtliche Anwendungsbereiche miteinander verknüpft werden und damit auch solche Teile durch Aluminiumschaum-Bauteile ersetzt werden, die bislang aus Kunststoff hergestellt und entsprechend geformt wurden.

Eine vorteilhafte Ausgestaltung der erfindungsgemäßen Lösung ist dadurch gekennzeichnet, daß die Wand des Kameragehäuses und/oder der Innenkamera aus einer glatten Oberfläche und einer Aluminiumschaum-Kaschierung oder einem Aluminiumschaumkern besteht.

Diese Ausgestaltung der erfindungsgemäßen Lösung eignet sich insbesondere für das Außengehäuse und/oder die Innenkamera einer Laufbildkamera bzw. Filmkassette, indem die glatte Oberfläche nach außen gerichtet und die Aluminiumkaschierung nach innen gerichtet ist, so daß die auf der Innenwand geschaffenen Reflexionsflächen eine zusätzliche Absorbierung des Luftschalls bewirken.

Eine Alternative bzw. zusätzlich einsetzbare Lösung ist dadurch gekennzeichnet, daß die Wand des Kameragehäuses und/oder der Innenkamera in Sandwich-Bauweise aus einer glatten Oberfläche mit dazwischen befindlichem Aluminiumschaumkern besteht.

Diese Ausführungsform der erfindungsgemäßen Lösung eignet sich insbesondere für die Verwendung bei Körperschall übertragenden Bauteilen der Laufbildkamera und kann somit sowohl für die Wand der Außenkamera, der Innenkamera und des Kassettengehäuses für Platinen zur Aufnahme der Filmtransporteinrichtung sowie für Bauteile im Bereich der Filmbahn eingesetzt werden.

Im folgenden wird die Erfindung anhand eines lediglich einen Ausführungsweg darstellenden Zeichnung naäher erläutert. Es zeigen:
- Fig. 1: eine Seitenansicht einer Laufbildkamera,
- Fig. 2: einen Schnitt durch ein einseitig kaschiertes Aluminiumschaum-Bauteil,
- Fig. 3: einen Schnitt durch ein Aluminiumschaum-Bauteil in Sandwich-Bauweise,
- Fig. 4: einen schematischen Längsschnitt durch eine Laufbildkamera mit auf einer Platine angeordneter Filmtransporteinrichtung und einer Darstellung verschiedener Einsatzbereiche von Aluminiumbauteilen mit Aluminiumschaumkern,
- Fig. 5: einen schematischen Längsschnitt durch eine Laufbildkamera mit Innenkamera und einer Darstellung verschiedener Einsatzbereiche von Aluminiumbauteilen mit Aluminiumschaumkern.
- Fig. 6: einen schematischen Längsschnitt durch eine Laufbildkamera mit einem Kameragehäuse aus Aluminiumschaum in Sandwich-Bauweise und
- Fig. 7: einen Längsschnitt durch die Frontseite einer Laufbildkamera mit der Anordnung geräuschdämmender Aluminiumschaum-Bauteile.

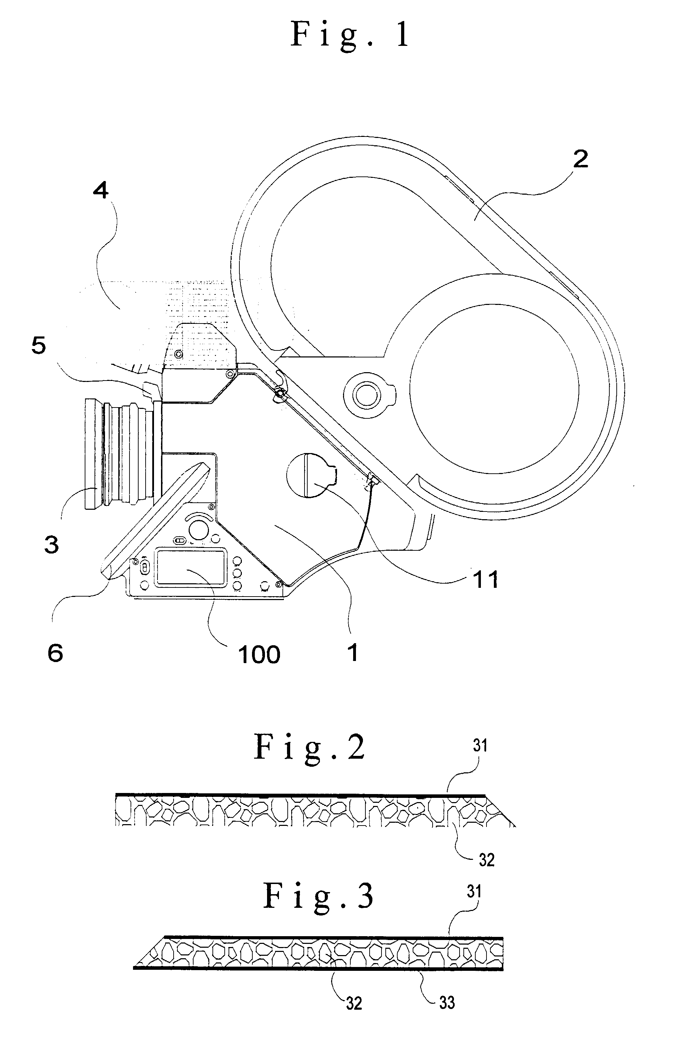

Die in Fig. 1 in einer Seitenansicht dargestellte Laufbildkamera weist ein Kameragehäuse 1 mit einer daran angelenkten Kamerakassette 2 auf, in der eine Filmabwickelspule und eine Filmaufwickelspule angeordnet sind. Am Kameragehäuse 1 ist ein Bedien- und Anzeigefeld 100 zum Einstellen und Auslösen von Kamerafunktionen sowie zur Anzeige verschiedener Kameraparameter angeordnet und ein Objektivträger 5 zur Festlegung von Wechselobjektiven an der Laufbildkamera ausgebildet. In der optischen Achse des am Objektivträger 5 befestigten Objektivs 3 ist ein Bildfenster im Kameragehäuse 1 vorgesehen, an dem ein Laufbildfilm intermittierend vorbeibewegt wird. Dabei gibt eine von einem Blendenmotor angetriebene und in einem Gehäuseteil 6 angeordnete Spiegelblende den durch das Objektiv 3 einfallenden Strahlengang zur Belichtung eines im Bildfenster stehenden Filmbildes des Laufbildfilmes frei bzw. reflektiert den Strahlengang während des Filmtransports in ein Sucherokular 4 oder zu anderen an die Laufbildkamera angeschlossenen Bildbetrachtungs- oder Verarbeitungseinrichtungen.

Im Kameragehäuse 1 ist ein Motor-Getriebe-Aggregat zum Abzug und Rücktransport des Laufbildfilmes aus der bzw. in die Filmkassette 2 sowie zum intermittierenden Transport des Laufbildfilmes entlang des Bildfensters vorgesehen, das durch eine Kameratür mit einem Klappgriff 11 zur Kameratür-Verriegelung abgedeckt wird. Das Motor-Getriebe-Aggregat ist wahlweise auf einer mit dem Kameragehäuse 1 verbundenen Platine oder in einer Innenkamera angeordnet, die über Abstands- und Schallisolierungselemente mit dem Kameragehäuse 1 verbunden ist. Die vom Motor-Getriebe-Aggregat, durch die Bewegung des Laufbildfilmes und durch den Antrieb und die Rotation der Spiegelblende verursachten Geräusche werden als Luft- und Körperschall auf das Kameragehäuse 1, die Kassette 2 sowie auf das Objektiv 3 übertragen und werden von dort an die Umgebung der Laufbildkamera als Luftschall abgegeben.

Um den hierdurch verursachten Geräuschpegel auf ein erträgliches Maß zu dämpfen, werden die eingangs zum Stand der Technik beschriebenen Maßnahmen getroffen, die zu einer Erhöhung des Herstellungsaufwandes, zu einer Vergrößerung des Bauvolumens und zu einer erschwerten Handhabung führen, wenn man beispielsweise an die Zugänglichkeit zum Motor-Getriebe-Aggregat bei einer Schaumstoffauskleidung des Innenraums des Kameragehäuses 1 denkt.

Durch die Verwendung von Aluminiumschaumbauteilen können die bekannten schallreduzierenden Maßnahmen ergänzt bzw. ersetzt werden.

Aluminiumschaum wird in einem pulvermetallurgischen Verfahren hergestellt, bei dem Aluminiumpulver mit einem pulverförmigen Treibmittel, vorzugsweise aus Titanhydrid, vermischt und zu einem festen Material kompaktiert wird, das zu Stäben oder Profilen weiterverarbeitet werden kann. Ein solches Profil ist in Figur 2 schematisch im Schnitt dargestellt. Es besteht aus einer Aluminiumschaumhaut 31 und Aluminiumschaum 32.

Zur Herstellung von in Figur 3 schematisch im Schnitt dargestellten Sandwichbauteilen werden vorgeformte Bauteile aus Aluminiumblech in einer Form mit einer bestimmten Menge Schaumpulver gefüllt und dann erwärmt. Daraus resultieren Aluminiumbauteile mit fester Aluminium-Außenhaut und einem Aluminiumschaumkern, wobei Haut und Kern innig miteinander verschmelzen. Dieses Aluminium-Sandwichblech mit Aluminiumschaumkern ist sehr leicht und extrem biegesteif. Es zeigt ein anderes Schwingungsverhalten als kompaktes Aluminium und ist nahezu schalltot.

In dieser Ausführungsform besteht das Bauteil aus einer Aluminiumschaumwand mit äußeren Aluminiumschaumhäuten 31 und 33 sowie einem dazwischen vorgesehenen Aluminiumschaumkern 32 in Sandwich-Bauweise. Diese Bauform bietet eine glatte Innen- und Außenfläche. für eine Aluminiumschaum-Bauteil.

Da sowohl Aluminium in Schaumform als auch als Sandwichbauteil mit Aluminiumschaumkern in Hohlformen geschmolzen oder gegossen werden kann, können auch kompliziert geformte Bauteile wie ein Kameragehäuse, eine Innenkamera, ein Kassettengehäuse oder verschiedene Bauteile zur Aufnahme eines Motor-Getriebe-Aggregats für eine Laufbildkamera problemlos und ohne notwendige Nachbearbeitung hergestellt werden.

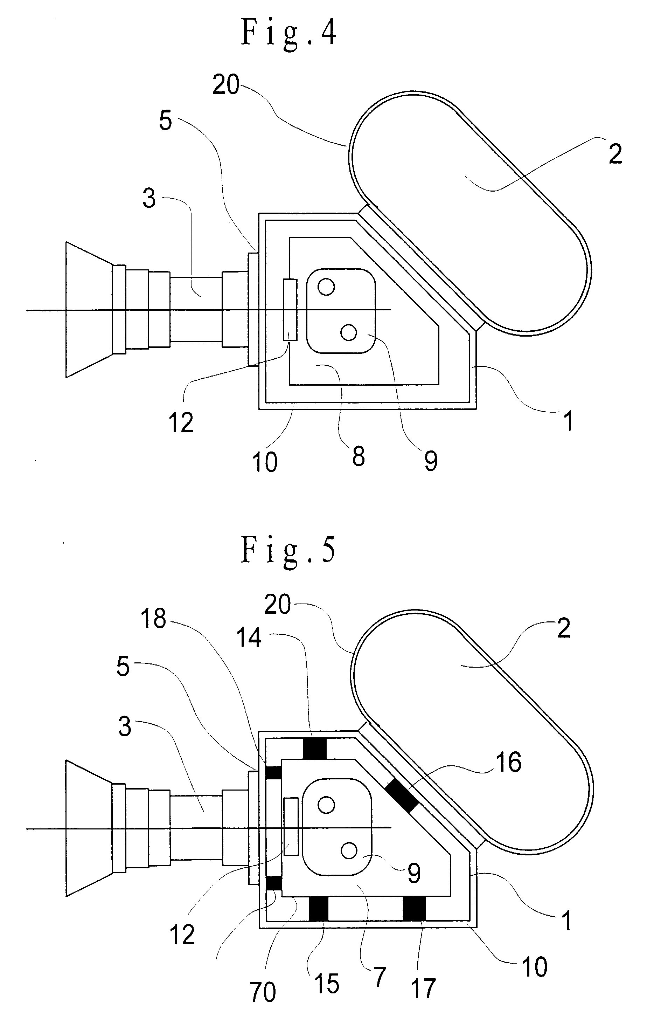

In den Fig. 4 und 5 sind schematisch zwei Anwendungsbeispiele für Aluminiumbauteile mit Aluminiumschaum bzw. Aluminiumschaumkern in Sandwichbauweise für eine Laufbildkamera dargestellt.

Fig. 4 zeigt einen schematischen Längsschnitt durch eine Laufbildkamera mit einem Kameragehäuse 1, an dem über einen Objektivadapter 5 ein Objektiv 3 sowie eine Kamerakassette 2 befestigt sind. Das Motor-Getriebe-Aggregat 9 zum intermittierenden Filmtransport sowie zum Transport des Laufbildfilmes aus der bzw. in die Kamerakassette 2 ist auf einer Platine 8 angeordnet, die das Bildfenster 12 trägt, das in der Achse des Kameraobjektivs 3 angeordnet ist.

Der Einsatz von Aluminiumschaumbauteilen in Form einseitig kaschierter Aluminiumschaumbauteile oder als Sandwichbauteil mit zweiseitig kaschiertem Aluminiumschaumkern bietet sich insbesondere für Gehäuseteile sowie für die Bauteile der Laufbildkamera an, die Körper- und Luftschall übertragen. Hierzu gehören das Gehäuse bzw. die Wandung des Motor-Getriebe-Aggregates 9, die Platine 8 der Filmtransporteinrichtung sowie die Gehäusewand 10 des Kameragehäuses 1 unter Einschluß des die Spiegelblende umgebenden Gehäuseteils sowie die Wand 20 der Kamerakassette 2.

Fig. 5 zeigt eine Laufbildkamera im Längsschnitt mit einem Kamera-Außengehäuse 1 und einer Innenkamera 7, die das Motor-Getriebe-Aggregat 9 zum Filmtransport und zum Antrieb der Spiegelblende aufweist.

Die Wand 70 der Innenkamera 7 ist über geräuschisolierende Bauteile 14 bis 19 mit der Gehäusewand 10 des Kameraußengehäuses 1 verbunden, wobei zusätzliche Maßnahmen dazu dienen, das Auflagemaß, d.h. den Abstand zwischen dem Bildfenster 12 und dem Objektivträger 5 konstant zu halten, damit durch Kamerabewegungen der durch das Objektiv 3 gelangende Strahlengang in der Bildebene des Bildfensters 12 fokussiert wird.

In dieser Ausführungsform einer Laufbildkamera werden zur Schallisolierung Aluminiumschaum-Sandwichplatten für das Kamera-Außengehäuse 1 und für die Wandung 20 der Kamerakassette 2 sowie für die Verbindungselemente 14 bis 19 zwischen der Innenkamera 7 und dem Kamera-Außengehäuse 10 eingesetzt. Weiterhin kann die Wand 70 der Innenkamera 7 aus Sandwichplatten mit Aluminiumschaumkern hergestellt werden. Alternativ hierzu können für das Kamera-Außengehäuse 1 sowie für die Kamerakassette 2 einseitig kaschierte Aluminiumschaumbauteile verwendet werden, die eine glatte Außenfläche und eine poröse, nach innen gerichtete Fläche zur diffusen Reflexion des vom Motor-Getriebe-Aggregat ausgehenden Luftschalls aufweisen.

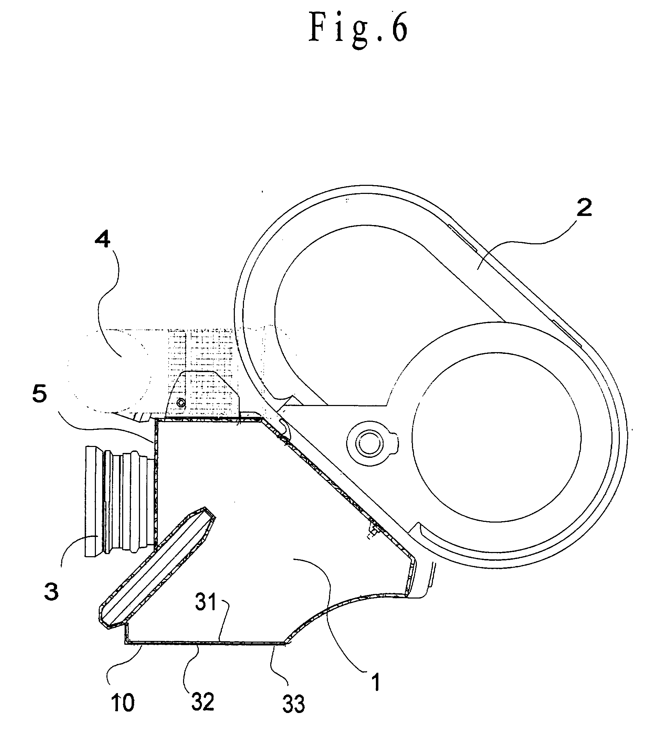

Der in Figur 6 dargestellte Längsschnitt durch eine Laufbildkamera zeigt eine weitere Anwendungsmöglichkeit zur Verwendung von Aluminiumschaum-Bauteilen in einer Laufbildkamera. In dieser Ausführungsform besteht das gesamte Kameragehäuse einschließlich des Gehäuseteils für die Spiegelblende aus einer Aluminiumschaumwand mit einer Aluminiumschaum-Innenhaut 31, einer Aluminiumschaum-Außenhaut 33 und einem Aluminiumschaumkern 32 in Sandwich-Bauweise. Diese Bauform bietet eine glatte Innen- und Außenfläche mit einer dazwischen befindlichen geräuschdämmenden Schicht aus Aluminiumschaum, so daß die durch das Kamerawerk, die rotierende Spiegelblende usw. erzeugten Geräusche mit Luft- und Körperschalldämpfung blockiert bzw. deutlich herabgesetzt werden.

In gleicher Weise kann die gesamte Kamerakassette 2 ausgebildet und im Bedarfsfall auch das Gehäuse der Sucheranordnung 4 in Sandwich-Bauweise hergestellt werden. Da das Kameragehäuse in Gußtechnik hergestellt werden kann, lassen sich auch komplizierte Bauformen des Kameragehäuses problemlos realisieren, so daß der Herstellungsaufwand gegenüber konventionellen Kameragehäusen aus Metall oder Kunststoff nicht vergrößert wird.

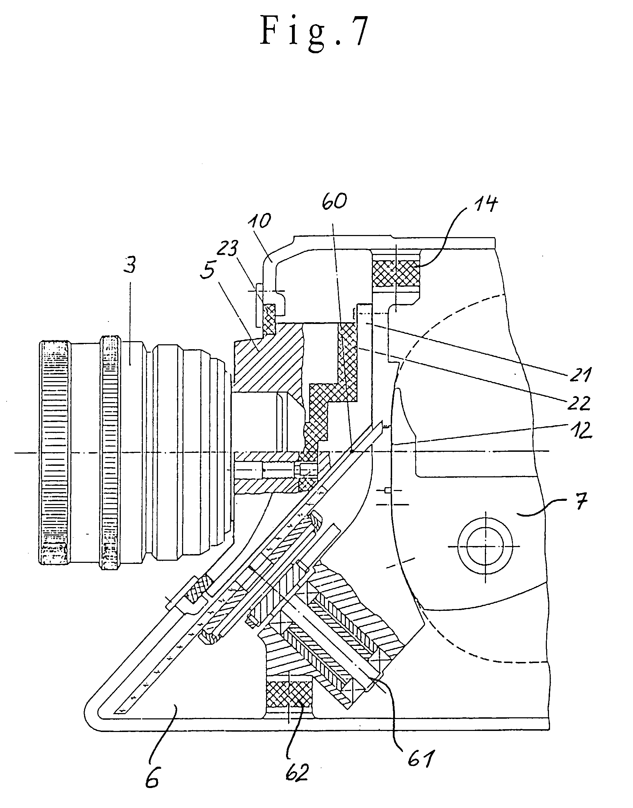

Figur 7 zeigt in einem detaillierten Längsschnitt durch die Frontseite einer Laufbildkamera spezifische Einsatzbereiche von Aluminiumschaum-Bauteilen an Stellen größter Wirksamkeit der geräuschdämmenden Wirkung der Aluminiumschaum-Bauteile. Zu dieser Anordnung können weitere geräuschdämmende Maßnahmen, wie beispielsweise die Ausbildung des gesamten Kameragehäuses aus Aluminiumschaum in Sandwich-Bauweise entsprechend der Figur 6 hinzugefügt werden, so daß insgesamt eine nahezu vollständig geräuschisolierte Laufbildkamera resultiert.

In der Anordnung nach Figur 7 ist in der Blendenanordnung 6 die rotierende Spiegelblende 60 und der Spiegelblendenmotor 61 mittels eines Aluminiumschaum-Bauteils 62 gegenüber dem Kameragehäuse 10 geräuschisolierend abgestützt. Die Verbindung zwischen der die geräuscherzeugenden Bauteile enthaltenden Innenkamera 7 mit dem Kameragehäuse 10 erfolgt über ein Verbindungselement 14 aus Aluminiumschaum, und die Verbindung zwischen dem Bildfenster 12 und dem Objektiv 3 über die Objektivbefestigung bzw. den Objektivadapter 5 erfolgt über ein Verbindungselement 22 aus Aluminiumschaum sowie die entsprechende Anbindung bzw. Zentrierung der Objektivbefestigung 5 am Kameragehäuse 10 über ein Justier- und Verbindungselement 23, das ebenfalls aus Aluminiumschaum besteht bzw. eine Aluminiumschaum-Innenschicht bei einer Sandwich-Bauweise enthält.

Die Innenkamera 7 ist über einen Flansch 21 mit der Frontseite der Laufbildkamera verbunden. Weiterhin gewährleistet die Verbindung des Bildfensters 12 mit dem Objektivadapter 5 über ein Verbindungselement 22 aus Aluminiumschaum nicht nur ein hohes Maß an Geräuschdämpfung, sondern auch eine absolute Maßhaltigkeit des Auflagemaßes zwischen dem Objektiv 3 und dem Bildfenster 12.

Die Verwendung von Aluminiumschaumbauteilen zur Verbindung der Innenkamera mit dem Kameragehäuse bzw. einer das Kamerawerk tragenden Grundplatte und dem Kameragehäuse über Aluminiumschaum-Bauteile stellt sicher, daß unabhängig von der räumlichen Lage der Kamera und auch innerhalb eines großen Temperaturbereiches von +50°C bis -25°C das Auflagemaß zwischen Bildfenster und Objektiv konstant bleibt, was eine gleichbleibende Bildqualität garantiert. Gleichzeitig wird der von dem geräuscherzeugenden Bauteil in der Laufbildkamera ausgehende Luft- und Körperschall äußerst wirksam gedämpft, so daß nur minimale Kamerageräusche über das Kameragehäuse, das Objektiv, die Sucheranordnung oder die Kamerakassette nach außen abgestrahlt werden.

Zusätzlich zu geräuschdämmenden Maßnahmen am Kameragehäuse, der Verbindung zwischen Innenkamera und Außenkamera sowie der Kamerakassette und der Sucherlupenanordnung ist der Einsatz von Aluminiumschaum-Bauteilen auch beim Kamerazubehör vorzusehen, insbesondere bei Zubehörteilen, die ebenfalls geräuscherzeugende Elemente enthalten, wie beispielsweise Objektivsteuermotoren, die an Zubehörstangen befestigt mit dem Objektiv verbunden werden, sowie für Zubehörteile, die große schallabstrahlende Flächen aufweisen, wie eine Mattebox sowie sämtliche Objektivteile.

Durch eine beliebige Kombination der vorstehend beschriebenen Maßnahmen lassen sich nahezu schalltote Laufbildkameras herstellen, bei denen der von der Laufbildkamera abgegebene Schallpegel ein Minimum aufweist.

## Patentansprüche

1. Laufbildkamera mit einem Kameragehäuse und einer im Kameragehäuse angeordneten Filmtransporteinrichtung,
**dadurch gekennzeichnet,**
daß Teile der Laufbildkamera, die geeignet sind, Körper- und/oder Luftschall zu übertragen, zumindest teilweise aus Aluminiumschaum bestehen.

2. Laufbildkamera nach Anspruch 1, **dadurch gekennzeichnet,** daß die Körper- und/oder Luftschall übertragenden Teile der Laufbildkamera als Aluminiumteile mit einem Aluminiumschaumkern ausgebildet sind.

3. Laufbildkamera nach Anspruch 1 oder 2, **dadurch gekennzeichnet,** daß die Wandung (10) des Kameragehäuses (1) oder von Teilen des Kameragehäuses (1) aus Aluminiumschaum besteht.

4. Laufbildkamera mit einem Kameragehäuse und einer im Kameragehäuse angeordneten Innenkamera, die gegenüber dem Kameragehäuse abgestützt ist und eine Filmtransporteinrichtung aufnimmt,
**dadurch gekennzeichnet,**
daß das Kameragehäuse (1) und/oder die Innenkamera (7) und/oder die Verbindungselemente (14 bis 19) zwischen dem Kameragehäuse (1) und der Innenkamera (7) zumindest teilweise aus Aluminiumschaum bestehen.

5. Laufbildkamera nach mindestens einem der vorangehenden Ansprüche, **dadurch gekennzeichnet,** daß die die Filmtransporteinrichtung tragenden Bauteile (8) zumindest teilweise aus Aluminiumschaum bestehen.

6. Laufbildkamera nach mindestens einem der vorangehenden Ansprüche, **dadurch gekennzeichnet,** daß die Wand (10) des Kameragehäuses (1) und/oder die Wand (70) der Innenkamera (7) aus einer glatten Oberfläche mit einer Aluminiumschaum-Kaschierung besteht.

7. Laufbildkamera nach mindestens einem der vorangehenden Ansprüche 1 bis 5, **dadurch gekennzeichnet**, daß die Wand (10) des Kameragehäuses (1) und/oder die Wand (70) der Innenkamera (7) aus einem Aluminium-Sandwichbauteil mit beidseitig glatter Oberfläche und einem dazwischen befindlichem Aluminiumschaumkern besteht.

8. Laufbildkamera nach mindestens einem der vorangehenden Ansprüche, **dadurch gekennzeichnet,** daß mit der Laufbildkamera verbindbare Zubehörteile aus Aluminiumschaum-Bauteilen bestehen oder Aluminiumschaum enthalten.
